# EUROPÄISCHE PATENTANMELDUNG

(11) **EP 1 239 378 A2**
(43) Veröffentlichungstag der Anmeldung: **11.09.2002**
(21) Anmeldenummer: 02000850.4
(22) Anmeldetag: 15.01.2002
(51) Int. Cl.: G06F 17/30

(54) **Verfahren zum Bereitstellen wenigstens einer personalisierten Web-Benutzerseite**

(30) Priorität: 07.03.2001 DE 10110924
(71) Anmelder: Deutsche Telekom AG, 53113 Bonn (DE)
(72) Erfinder: Wannenmacher, Heinz, 64390 Erzhausen (DE)

(57) **Zusammenfassung**

Zu Beginn einer Internet-Sitzung erzeugt ein auf dem Personal Computer (70) eines Benutzers implementierter Browser die vom Provider erstellte Startseite. Die Startseite ist mehr oder weniger vom Provider voreingestellt und berücksichtigt das Zugriffsverhalten des Benutzers während einer Internet-Sitzung nicht.
Der Erfindung liegt daher die Aufgabe zugrunde, ein Verfahren sowie einen Computer-lesbaren Datenträger mit einem darauf gespeicherten Computerprogramm bereitzustellen, welches personalisierte Web-Benutzerseiten erzeugen kann.

Hierzu wird zunächst zu Beginn einer Internet-Sitzung eine Web-Startseite auf das Web-taugliche Endgerät (70) geladen. Der Benutzer gibt anschließend wenigstens einen Suchbegriff und/oder eine bestimmte Zieladresse zu einer bestimmten Webseite ein. Wurde ein Suchbegriff eingegeben, so werden zu diesem die entsprechenden Zieladressen erzeugt. Alle Zieladressen werden nachher in einem Benutzer-bezogenen Speicher (100, 120, 130) abgelegt. Anschließend wird wenigstens eine personalisierte Web-Benutzerseite aus den gespeicherten Zieladressen, die in Abhängigkeit von wenigstens einem vorbestimmten Kriterium ausgewählt werden, erstellt. Diese personalisierte Web-Benutzerseite wird Benutzer-gesteuert oder automatisch an dessen Endgerät dargestellt. Nach Beendigung der Sitzung wird die aktuelle personalisierte Web-Benutzerseite in dem oder einem anderen Benutzer-bezogenen Speicher (130) zur Weiterverwendung abgelegt.

## Beschreibung

Die Erfindung betrifft ein Verfahren zum Bereitstellen wenigstens einer personalisierten Web-Benutzerseite sowie einen Computer-lesbaren Datenträger, auf welchem ein solches Verfahren gespeichert ist.

Das Internet ist ein Netzwerk aus zahlreichen Computern, die weltweit miteinander verbunden sind. Benutzer des Internets können über den Internetdienst WWW (World-Wide-Web), der auf der Technologie des Hypertextes basiert, Text-, Audio- und Videodokumente im Internet auffinden. Diese Dokumente kann sich ein Benutzer mit Hilfe eines Browsers, der auf seinem Web-fähigen Computer installiert ist, herunterladen und ansehen. Zugang zum Internet erhält der Benutzer beispielsweise über den Server eines Internet- oder Online-Providers, bei dem er sich angemeldet hat. Zu Beginn einer Internet-Sitzung wird zunächst eine voreingestellte Startseite, zumeist die Startseite des Providers, mit Hilfe des auf dem Benutzer-Computer installierten Browsers geladen und auf dem Monitor des Benutzer-Computers dargestellt. Diese Startseite setzt sich üblicherweise aus vom Provider voreingestellten Internet-Links und Werbebannern zusammen. Ein Nachteil der bekannten Browser ist darin zu sehen, dass diese nur Startseiten mit fest eingestellten Internet-Links enthalten, die nicht durch das Benutzerverhalten personalisierbare Links erweitert werden können.

Der Erfindung liegt daher die Aufgabe zugrunde, ein Verfahren und Computerprogramm zur Verfügung zu stellen, mit denen die vom Browser erzeugte voreingestellte Startseite um einen personalisierten Abschnitt erweitert werden kann.

Der Kerngedanke der Erfindung ist demnach darin zu sehen, mit Hilfe eines Verfahrens und eines Computerprogramms zusätzlich zu der von einem Browser bereitgestellten Startseite beispielsweise des Providers, über den der Benutzer Zugang zum Internet erhält, eine personalisierte Web-Benutzerseite zu erzeugen, die das Zgriffsververhalten des Benutzer auf Webseiten während einer oder mehrerer Internet-Sitzung widerspiegelt.

Das oben genannte technische Problem löst die Erfindung zum einen mit den Verfahrensschritten des Anspruchs 1.

Danach wird zu Beginn einer Sitzung, nachfolgend auch Internet-Sitzung genannt, eine vorbestimmte Web-Startseite auf das Web-fähige Endgerät eines Benutzers geladen. Bei dieser vorbestimmten Web-Startseite handelt es sich in der Regel um die Startseite, auch Homepage genannt, des Providers, über den der Benutzer Zugang zum Internet erhält. Während einer Sitzung ist es üblich, dass der Benutzer wenigstens einen Suchbegriff und/oder eine bestimmte Zieladresse eingibt. An dieser Stelle sei erwähnt, dass Zieladressen auch durch Anklicken gekennzeichneter Symbole, sogenannte Hyperlinks, die auf einer WebseiLe enthalten sein können, aufgerufen werden können. Im Web werden diese Zieladressen gemäß einem bestimmten Adressierungsschema erzeugt, das als Uniform Resource Locator, kurz URL genannt, bekannt ist. Gibt der Benutzer anstelle einer bestimmten Zieladresse oder eines Hyperlinks einen Suchbegriff ein, so werden zunächst zu dem Suchbegriff die dazugehörenden Links bzw. die entsprechenden Zieladressen erzeugt. Die Zieladressen werden anschließend in einen Benutzer-bezogenen Speicher abgelegt. Der Benutzer-bezogene Speicher ist beispielsweise im Endgerät des Benutzers oder im Server des Providers implementiert. Anschließend wird wenigstens eine personalisierte Web-Benutzerseite aus den gespeicherten Zieladressen erstellt, die in Abhängigkeit von wenigstens einem vorbestimmten Kriterium ausgewählt werden.

Vorzugsweise berücksichtigt das Kriterium verschiedene Sachthemen oder die Zugriffshäufigkeit zu einer bestimmten Webseite. Die personalisierte Web-Benutzerseite wird dann Benutzer-gesteuert oder automatisch an dem Endgerät des Benutzers dargestellt. Benutzer-gesteuert heißt in diesem Zusammenhang, dass der Benutzer beispielsweise über Softkeys die Darstellung bzw. Einblendung der personalisierten Web-Benutzerseite in die Web-Startseite ein- und ausschalten kann. Nach Beendigung der Sitzung wird die personalisierte Web-Benutzerseite in dem oder einem anderen Benutzer-bezogenen Speicher zur Weiterverwendung abgelegt.

Mit Hilfe des Verfahrens ist es möglich, das Benutzerverhalten während einer Internet-Sitzung zu speichern, zu Beginn einer neuen Sitzung die gespeicherte personalisierte Web-Benutzerseite zu laden und an dem Endgerät des Benutzers wieder darzustellen.

Mit anderen Worten hat der Benutzer nunmehr die Möglichkeit, die im Wesentlichen voreingestellte Startseite seines Providers durch sein Internet-Verhalten individuell zu beeinflussen, so dass die Internet-Nutzung komfortabeler und attraktiver als bisher gestaltet werden kann.

Sofern die Kriterien zum Auswählen von Zieladressen, die zur Erstellung einer Web-Benutzerseite verwendet werden, unterschiedliche Themen betrffen, können verschiedene personalisierte Webseiten für denselben Benutzer erstellt und abgelegt werden. Die unterschiedlichen personalisierten Web-Benutzerseiten werden mit einer Kennung versehen, so dass der Benutzer je nach Wunsch eine bestimmte personalisierte Web-Benutzerseite laden kann. Natürlich ist es denkbar, alle verschiedenen personalisierten Web-Benutzerseiten auch gleichzeitig anzuzeigen.

Um dem Benutzer eine kostenreduzierte oder sogar kostenlose Internet-Nutzung oder eine werbliche Kommunikation mit einem bestimmten Dienstanbieter zu ermöglichen, ist wenigstens ein fest vorgegebener Suchbegriff vorgesehen, zu dem zu Beginn einer Sitzung die dazugehörenden Zieladressen und/oder Informationsdaten erzeugt werden. Die Informationsdaten, die Werbeflächen enthalten können, werden zusammen mit den Zieladressen automatisch oder Benutzer-gesteuert mit einer personalisierten Web-Benutzerseite an dem Endgerät des Benutzers dargestellt.

Auf diese Weise können auch werbefinanzierte (gesponsorte) Internet-Geräte oder Personal Computer zusammen mit einem Provider, einem Internet-Verkaufshaus oder einer Internet-Bank sehr günstig oder sogar zum Nulltarif an die Endkunden abgegeben werden.

Zweckmäßigerweise kann die personalisierte Web-Benutzerseite während der Sitzung in Abhängigkeit des Benutzerverhaltens aktualisiert werden.

Um zu vermeiden, dass die Anzahl der Zieladressen in der personalisierte Web-Benutzerseite unüberschaubar wächst, können darin enthaltende Zieladressen vom Benutzer selbst gelöscht werden oder gemäß eines oder mehrerer vorbestimmter Kriterien automatisch gelöscht werden.

Das oben genannte Problem wird auch durch einen Computer-lesbaren Datenträger gelöst, auf welchem ein Computerprogramm zum Bereitstellen wenigstens einer personalisierten Web-Benutzerseite gespeichert ist.

Die Erfindung wird nachstehend anhand eines Ausführungsbeispiels in Verbindung mit den Zeichnungen näher erläutert. Es zeigen:
- Fig. 1: einen an das Internet angeschlossenen Web-fähigen PC,
- Fig. 2: eine auf dem Web-fähigen PC dargestellte Startseite mit einer personalisierten Web-Benutzerseite und einer Sponsorseite.

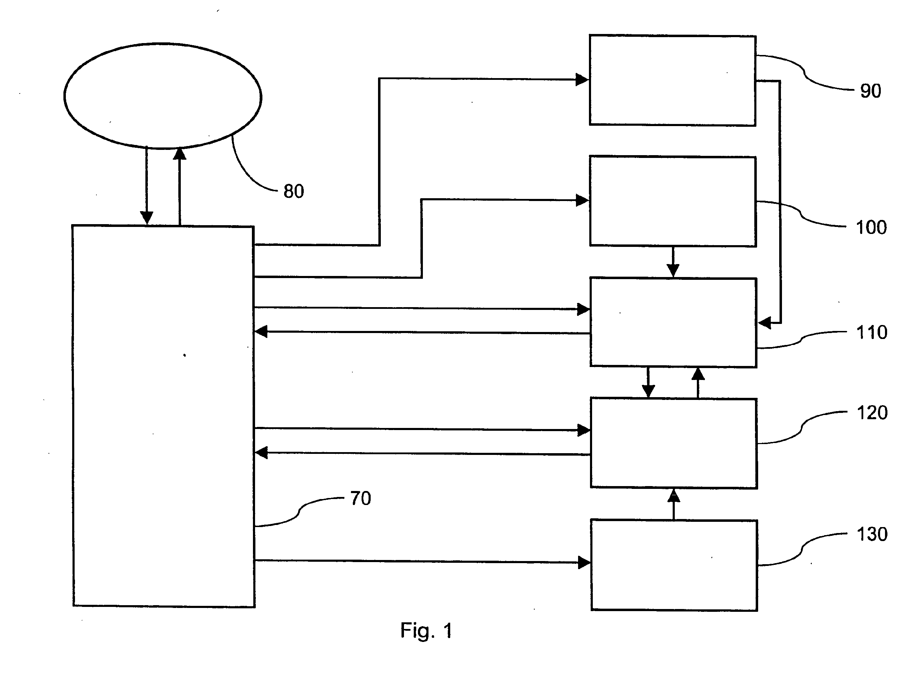

Fig. 1 zeigt einen bei einem Nutzer aufgestellten Web-fähigen PC 70, der beispielsweise über eine herkömmliche ISDN-Karte an das Internet 80 angeschlossen ist. Der PC ist mit einem Sponsor-Suchregister 90, einem Persönliches-Suchwort-Register 100, einer Hintergrund-Suchmaschine 110, einem Adressen-Speicher 130 und einem Profilspeicher 120 verbunden. Die Hintergrund- Suchmaschine 110 steht wiederum mit dem PC 70, dem Sponsor-Suchregister 90, dem Persönliches-Suchwort-Register 100 und dem Profilspeicher 120 in Verbindung. Wie weiter unten noch ausführlich erläutert wird, ist im Sponsorspeicher 90 wenigstens ein Suchbegriff dauerhaft gespeichert. In das Persönliches-Suchwort-Register 100 werden in Abhängigkeit vom Zugriffsverhalten des Benutzers auf Webseiten und von vorbestimmten Kriterien Suchbegriffe temporär geladen. Die Hintergrund-Suchmaschine 110 erzeugt dann die zu den im Sponsor-Suchregister 90 und im Persönliches-Suchwort-Register 100 gespeicherten Suchbegriffen gehörenden Hyperlinks, die als Zieladressen in Form einer URL im Profilspeicher 120 abgelegt werden. Der Adressen-Speicher 130 dient dazu, einzeln eingebene Zieladressen im URL-Format zu speichern. Der Profilspeicher 120 und/oder das Sponsor-Suchregister 90, das Persönliches-Suchwort-Register 100, die Hintergrund-Suchmaschine 110 und der Adressen-Speicher 130 können Bestandteil des PCs 70 oder im Server eines Providers implemetiert sein. Wichtig ist darauf hinzuweisen, das die im Profilspeicher 120 abgelegten Zieladressen, die wenigstens eine personalisierte Web-Benutzerseite definieren, nach Beendigung einer Internetsitzung nicht gelöscht werden.

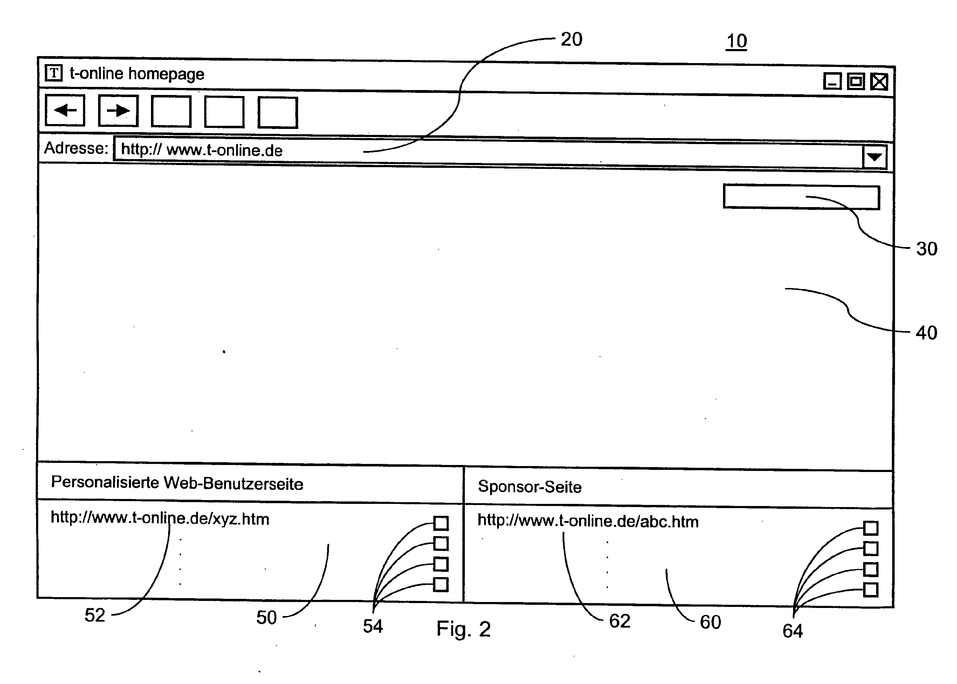

Fig. 2 zeigt in stark vereinfachter Form die auf dem Monitor des PCs 70 dargestellte Startseite 10 eines Providers, beispielsweise von T-Online der Deutschen Telekom AG. Diese Startseite 10 enthält ein mit "Adresse" gekennzeichnetes Feld 20, in welches der Benutzer eine bestimmten Web-Zieladresse in Form einer URL eingeben kann, um eine bestimmte Webseite herunter zu laden. Des weiteren enthält die Startseite 10 ein Feld 30, in welches der Benutzer einen bestimmten Suchbegriff eingeben kann, zu welchem dann mit Hilfe der Hintergrund-Suchmaschine 110 die dazugehörenden Hyperlinks erzeugt werden. Das mit 40 gekennzeichnete Feld ist für den Inhalt der Starseite reserviert und kann neben Werbe-Bannern zahlreiche Links zu verschiedenen Webseiten enthalten. Feld 50 ist für wenigstens eine personalisierte Web-Benutzerseite reserviert, die URL-Adressen enthält, die in Abhängigkeit des Benutzerverhaltens und vorbestimmter Kriterien während einer Internet-Sitzung erzeugt werden. Das Verfahren zur Erzeugung einer personalisierten Web-Benutzerseite ist Gegenstand der Erfindung und wird weiter unten noch ausführlicher erläutert. Ein Feld 60 ist beispielsweise für eine Werbefläche bestimmte Zieladressen zu einem Sponsor reserviert.

Die Darstellung der personalisierten Links und Sponsoren-Links in den Feldern 50 bzw 60 kann zur besseren Visualisierung in Form von URL-Adressen 52 bzw. 62 und/oder in kleinen Ikonen 54 bzw. 64 der zugehörigen Startseite der jeweiligen URL-Adressen erfolgen.

Nachfolgend wird das Verfahren und das auf einem Computer-lesbaren Datenträger abgelegte Computerprogramm, welches auf dem PC 70 eines Internet-Nutzers laufen kann, näher erläutert.

Zunächst sei angenommen, dass der Benutzer eine Internet-Sitzung an seinem Personal Computer 70 eingeleitet hat. Als Ergebnis erzeugt der auf dem Personal Computer 70 des Benutzers gespeicherter Browser die Startseite 10 des Providers, über den der Benutzer Zugang zum Internet erhält. Während einer Internet-Sitzung gibt der Benutzer beispielsweise in Feld 20 hintereinander verschiedene Adressen zu verschiedenen Webseiten ein, die er sich gerne ansehen möchte. Die eingegebenen Adressen werden zunächst im Adressen-Speicher 130 abgelegt. Ferner kann der Benutzer im Feld 30 Suchbegriffe eingeben, falls er beispielsweise die genaue Adresse einer Webseite nicht kennt oder Adressen zu einem bestimmten Fachgebiet sucht. Der eingegebene Suchbegriff wird im Persönliches-Suchwort-Register 100 abgelegt und der Hintergrund-Suchmaschine zugeführt, die die zum Suchbegriff gehörenden Hyperlinks bzw. die entsprechenden Zieladressen erzeugt und gegebenenfalls im Persönliches-Suchwort-Register 100 oder im Adressen-Speicher 130 speichert. Aus den gespeicherten Links wird danach im PC 70 wenigstens eine personalisierte Web-Benutzerseite erzeugt. Das Auswählen der im Adressen-Speicher 130 und/oder im Persönliches-Suchwort-Register 100 gespeicherten Zieladressen zur Bildung einer Web-Benutzerseite erfolgt nach wenigstens einem Kriterium. Ein Kriterium kann beispielsweise die Zugriffshäufigkeit auf die Webseiten zu einem bestimmten Thema oder Diensteanbieter oder auf einzelne Webseiten während einer oder mehrerer Internet-Sitzung sein. Dies bedeutet, dass Zieladressen nur dann in die personalsierte Web-Benutzerseite mitaufgenommen werden, wenn eine bestimmte Webseite, ein bestimmtes Thema oder ein bestimmter Dienstanbieter entsprechend häufig aufgerufen worden sind. Betrifft das Kriterium lediglich ein bestimmtes Thema, so werden alle Links, die zu diesem Thema gehören, in die personalisierte Web-Benutzerseite mitaufgenommen. Sofern der Benutzer die Option "personalisierte Web-Benutzerseite anzeigen" aktiviert hat, wird die personalisierte Web-Benutzerseite im Feld 50 innerhalb der Startseite 10 auf dem Monitor seines Personal Computers 70 angezeigt. Alternativ ist es denkbar, dass eine personalisierte Web-Benutzerseite automatisch d.h. unabhängig vom Benutzer sofort aus dem Profilspeicher 120 ausgelesen und auf dem Monitor seines Personal Computers 70 dargestellt wird.

Wenn die Kriterien zum Auswählen von Zieladressen für eine Web-Benutzerseite verschiedene Themen widerspiegeln, ist es möglich, mehrere personalisierte Web-Benutzerseiten für einen Benutzer zu erzeugen. Damit der Benutzer sich gezielt eine bestimmte personalisierte Web-Benutzerseite im Feld 50 anzeigen lassen kann, wird jeder im Profilspeicher 120 abgelegten personalisierten Web-Benutzerseite eine eindeutige Kennung zugeordnet, über die die personalisierte Web-Benutzerseite aufrufbar ist.

In Abhängigkeit von den gewählten Kriterien wird jede personalisierte Web-Benutzerseite während einer Internet-Sitzung aktualisiert. Am Ende einer Sitzung wird die aktuelle personalisierte Web-Benutzerseite im Profilspeicher 120 abgelegt.

Neben der personalisierten Web-Benutzerseite, die im Feld 50 angezeigt werden kann, kann in dem Computerprogramm zum Bereitstellen einer personalisierten Web-Benutzerseite auch wenigstens ein Suchbegriff fest programmiert sein, der zu Beginn jeder Internet-Sitzung aus dem Sponsor-Suchregister 90 der Hintergrund-Suchmaschine 110 übergeben wird. Der Suchbegriff kann alternativ auch über ein Firmwareupdate über das Internet oder über einen Fileserver im Punkt-zu-Punkt-Modus in das Sponsor-Suchregister geschrieben werden. Die Hintergrund-Suchmaschine 110 erzeugt daraufhin die zum Suchbegriff gehörenden Links, die als URL-Adressen vorzugsweise automatisch im Feld 60 der Startseite 10 dargestellt werden.

Bei dem Suchbegriff kann es sich um einen bestimmten Diensteanbieter handeln, der beispielsweise als Sponsor des Benutzers auftritt. Auf diese Weise hat der Benutzer die Möglichkeit, zum Nulltarif oder zu einem reduzierten Tarif das Internet zu nutzen. Neben den zum fest einprogrammierten Suchbegriff gehörenden Links können auch dem Sponsor zugeordnete Werbe-Banner im Feld 60 dargestellt werden. An dieser. Stelle sei erwähnt, dass die personalisierte Web-Benutzerseite, die zum fest einprogrammierten Suchbegriff gehörenden Links und/oder Werbe-Banner gleichzeitig innerhalb der Startseite 10 dargestellt werden können.

Um das Aufrufen von bestimmten Webseiten mit Hilfe der in den Feldern 50 und 60 angezeigten URL-Adressen zu erleichtern, sind diese als Plug-Ins realisiert.

Mit Hilfe dieses Verfahrens ist es somit möglich, neben der von einem Browser erzeugten Startseite auch eine vom Benutzerverhalten abhängige personalisierte Web-Benutzerseite zusammen mit den einem festen Suchbegriff zugeordneten Links auf der Oberfläche des Monitors des Personal Computers 70 anzuzeigen.

Am Ende einer Internet-Sitzung wird, wie bereits erwähnt, die aktualle personalisierte Web-Benutzerseite im Profilspeicher 130 abgelegt. Zu Beginn einer jeden neuen Internet Sitzung kann daher dem Benutzer seine zuletzt gespeicherte personalisierte Web-Benutzerseite auf dem Monitor des Personal Computers angezeigt werden.

Befindet sich der Profilspeicher 130 in dem Server eines Providers, werden die personalisierten Web-Benutzerseiten zweckmäßigerweise Paßwort-geschützt zum Provider-Server übertragen und dort abgelegt.

Dank des oben beschriebenen Verfahrens und Computerprogramms wird dem Benutzer ein erleichterter und voreingestellter Web-Zugriff ermöglicht, den dieser aufgrund seiner Web-Recherchen selbst erstellt hat. Zusätzlich ist es möglich, Zielgruppen-spezifische Internet-Endgeräte z.B. mit fest eingestellten Werbe-Bannern und Links zu einem Sponsor zu reduzierten Tarifen und Preisen dem Kunden anzubieten.

## Patentansprüche

1. Verfahren zum Bereitstellen wenigstens einer personalisierten Web-Benutzerseite mit folgenden Verfahrensschritten:
Laden einer vorbestimmten Web-Startseite auf das Web-fähige Endgerät (70) eines Benutzers zu Beginn einer Sitzung;
Eingeben wenigstens eines Suchbegriffs und/oder einer bestimmten Zieladresse;
Erzeugen der zu einem eingegebenen Suchbegriff gehörenden Zieladressen;
Speichern (100, 120, 130) der Zieladressen in wenigstens einem Benutzer-bezogenen Speicher;
Erstellen wenigstens einer personalisierten Web-Benutzerseite aus den gespeicherten Zieladressen, die in Abhängigkeit von wenigstens einem vorbestimmten Kriterium ausgewählt werden;
Benutzer-gesteuertes oder automatisches Darstellen der personalisierten Web-Benutzerseite an dessen Endgerät (70); und
Ablegen der aktuellen personalisierten Web-Benutzerseite nach Beendigung der Sitzung in dem oder einem anderen Benutzer-bezogenen Speicher (120) zur Weiterverwendung.

2. Verfahren nach Anspruch 1,
**dadurch gekennzeichnet, dass**
das Kriterium zum Auswählen einer oder mehrerer Zieladressen Themen-bezogen ist oder die Zugriffshäufigkeit zu einer bestimmten Webseite widerspiegelt.

3. Verfahren nach Anspruch 1 oder 2,
**dadurch gekennzeichnet, dass**
zu Beginn einer Sitzung die abgelegte personalisierte Web-Benutzerseite geladen und an dem Endgerät (70) des Benutzers dargestellt werden kann.

4. Verfahren nach einem der Ansprüche 1 bis 3,
**dadurch gekennzeichnet, dass**
zu Beginn einer Sitzung zu wenigstens einem fest vorgegebenen Suchbegriff die dazugehörenden Zieladressen und/oder Informationsdaten erzeugt werden, die automatisch oder Benutzer-gesteuert mit einer personalisierten Web-Benutzerseite an dessen Endgerät (70) dargestellt werden.

5. Verfahren nach einem der Ansprüche 1 bis 4,
**dadurch gekennzeichnet, dass**
die personalisierte Web-Benutzerseite und/oder die zu dem fest vorgegebenen Suchbegriff gehörenden Zieladressen und /oder Informationsdaten in dem Endgerät des Benutzers oder einem Provider-Server abgelegt werden.

6. Verfahren nach einem der Ansprüche 1 bis 5,
**dadurch gekennzeichnet, dass**
die personalisierte Web-Benutzerseite während der Sitzung in Abhängigkeit des Benutzerverhaltens aktualisiert werden kann.

7. Verfahren nach einem der Ansprüche 1 bis 6,
**dadurch gekennzeichnet, dass**
Zieladressen der personalisierten Web-Benutzerseite in Abhängigkeit eines vorbestimmbaren Kriteriums gelöscht werden.

8. Computer-lesbarer Datenträger, auf welchem ein Computerprogramm zum Bereitstellen wenigstens einer personalisierten Web-Benutzerseite mit folgenden Schritten gespeichert ist:
Laden einer vorbestimmten Web-Startseite auf das Web-fähige Endgerät (70) eines Benutzers zu Beginn einer Sitzung;
Erzeugen der zu einem vom Benutzer eingegebenen Suchbegriff gehörenden Zieladressen;
Speichern der Zieladressen in wenigstens einem Benutzer-bezogenen Speicher (100, 120, 130);
Erstellen wenigstens einer personalisierten Web-Benutzerseite aus den gespeicherten Zieladressen, die in Abhängigkeit von wenigstens einem vorbestimmten Kriterium ausgewählt werden;
Benutzer-gesteuertes oder automatisches Darstellen der personalisierten Web-Benutzerseite an dessen Endgerät; und
Ablegen der aktuellen personalisierten Web-Benutzerseite nach Beendigung der Sitzung in dem oder einem anderen Benutzer-bezogenen Speicher (120) zur Weiterverwendung.

9. Computer-lesbarer Datenträger nach Anspruch 8,
**dadurch gekennzeichnet, dass**
das Kriterium zum Auswählen einer oder mehrerer Zieladressen Themen-bezogen ist oder die Zugriffshäufigkeit zu einer bestimmten Webseite widerspiegelt.

10. Computer-lesbarer Datenträger nach Anspruch 8 oder 9,
**dadurch gekennzeichnet, dass**
das Computerprogramm folgenden Schritt enthält:
zu Beginn einer neuen Sitzung kann die abgelegte personalisierte Web-Benutzerseite geladen und an dem Endgerät des Benutzers dargestellt werden.

11. Computer-lesbarer Datenträger nach einem der Ansprüche 8 bis 10,
**dadurch gekennzeichnet, dass**
das Computerprogramm folgenden Schritt umfasst:
zu Beginn einer Sitzung werden zu wenigstens einem fest vorprogrammierten Suchbegriff die dazugehörenden Zieladressen und/oder Informationsdaten erzeugt, die automatisch oder Benutzer-gesteuert mit der personalisierten Web-Benutzerseite an dessen Endgerät dargestellt werden.

12. Computer-lesbarer Datenträger nach einem der Ansprüche 8 bis 11,
**dadurch gekennzeichnet, dass**
das Computerprogramm folgende Schritte enthält:
Ablegen der personalisierten Web-Benutzerseite und/oder der zu dem fest vorgegebenen Suchbegriff gehörenden Zieladressen und /oder Informationsdaten in dem Endgerät des Benutzers oder einem Provider-Server.

13. Computer-lesbarer Datenträger nach einem der Ansprüche 8 bis 12,
**dadurch gekennzeichnet, dass**
das Computerprogramm folgenden Schritt umfasst:
Aktualisieren der personalisierten Web-Benutzerseite während der Sitzung in Abhängigkeit des Benutzerverhaltens.

14. Computer-lesbarer Datenträger nach einem der Ansprüche 8 bis 13,
**dadurch gekennzeichnet, dass**
das Computerprogramm folgenden Schritt enthält:
Löschen von Zieladressen der personalisierten Web-Benutzerseite in Abhängigkeit eines vorbestimmbaren Kriteriums.
